# EUROPEAN PATENT SPECIFICATION

(11) **EP 1 240 732 B1**
(45) Date of publication and mention of the grant of the patent: **11.05.2005**
(21) Application number: 00981281.9
(22) Date of filing: 20.11.2000
(51) Int. Cl.: H04B 7/26, H04J 3/06

(54) **TELECOMMUNICATION NETWORK SYNCHRONISATION**
SYNCHRONISIERUNG EINES NACHRICHTENÜBERTRAGUNGSNETZWERKS
SYNCHRONISATION DE RESEAU DE TELECOMMUNICATION

(30) Priority: 22.12.1999 GB 9930132
(43) Date of publication of application: 18.09.2002
(73) Proprietor: Telefonaktiebolaget LM Ericsson (publ), 164 83 Stockholm (SE)
(72) Inventor: LIPSANEN, Mikko, Antero, FIN-21380 Aura (FI)
(74) Representative: Lind, Robert
(86) International application number: PCT/EP2000/011539
(87) International publication number: WO 2001/047150

(56) References cited:
- EP-A- 0 626 769
- WO-A-97/33396
- WO-A-98/35466

## Description

### Field of the Invention

The present invention relates to the synchronisation of nodes in a telecommunication network and in particular, though not necessarily, to the synchronisation of nodes in a Universal Mobile Telecommunications System network.

### Background to the Invention

In a digital communication network, such as a telecommunications network or a private network having several private branch exchanges, it is often necessary to synchronise the time clocks of respective network nodes in order to ensure correct operation of the network. Network synchronisation permits all nodes on the network to operate from a common time base. This means that when one node (i.e. an intersection point) sends data to another node, both nodes can be expected to operate at approximately the same rate ensuring the successful transfer of data between the nodes. Background information on the need for network node synchronisation can be found in EP0450828.

In so-called "master-slave" synchronisation, one master node is chosen to distribute high quality clock signals (generated by a Primary Reference Clock (PRC)) to all slave nodes in a hierarchy of network nodes. The master node distributes PRC clock signals to adjacent nodes which in turn distribute the received and regenerated clock signals to their adjacent nodes until all the nodes in the network are using the same clock origin.

The need for synchronisation is especially important in mobile telecommunication networks, and will become even more so with the introduction of Universal Mobile Telecommunications System (UMTS) networks where the UMTS Terrestrial Radio Access Network (UTRAN) places very severe limits on network synchronisation.

A typical UTRAN configuration consists of Radio Network Controllers (RNCs) which perform switching functions in the network (analogous in some ways with conventional telephone exchanges and with Mobile Switching Centres of GSM networks) and Radio Base Stations (RBSs) which provide the interface between the UTRAN and the mobile terminals (each RBS being responsible for a given cell). The RNCs and RBSs are arranged in a hierarchy (or hierarchies) with a single RNC possibly being responsible for tens of RBSs. The link structure in a UTRAN may be complex, with nodes of the same type being linked to one another as well as to nodes of a different type. In certain circumstances, synchronisation may be taken from a co-located GSM network or UTRAN synchronisation may be utilised in GSM nodes.

In the event of a synchronisation failure, e.g. due to the failure of a link between two nodes, action must be taken quickly to re-establish synchronisation. This usually means selecting for the node suffering from the effects of the failure (as well as for other nodes downstream of that node) an alternative incoming link which can be used to achieve synchronisation. Typically, certain incoming links are preferred to other links for this purpose, and the selection of an appropriate link requires a network level administration system which is connected to all network nodes. This work requires each node of the network to have a complete knowledge of the network and, in failure situations, the network synchronisation can suffer from unforeseen combinations of the network nodes.

WO95/24801 describes a method of synchronising a network by propagating synchronisation messages down through a hierarchy of network nodes. The synchronisation messages each comprise a master node address, a distance-to-master node, indicated as the number of intermediate nodes through which the message has passed, and the identity of the transmitting node. Each node through which a message passes, increases a distance counter by 1 and changes the transmitting node identity to its own identity. The path field allows receiving nodes to prioritise incoming links for synchronisation purposes.

WO96/39760 describes a method of detecting timing loops in a Synchronous Digital Hierarchy (SDH) network by sending a synchronisation message consisting of the identities of all the nodes through which the synchronisation message has passed. The synchronisation message also contains a count of the number of nodes through which clock signal has passed. This is used to prevent excessively long synchronisation chains.

WO97/33396 describes a method of synchronising an element in a network by selecting from a plurality of clock references received on different incoming links. Trail information is added to synchronisation messages by the neighbouring elements. WO98/35466 describes a synchronisation network in which node interfaces for each node are allocated different synchronisation priorities.

### Summary of the Invention

It is an object of the present invention to overcome or at least mitigate the disadvantages of known synchronisation networks. In particular, it is an object of the present invention to provide a synchronisation network in which synchronisation problems may be overcome substantially on a node level, automatically and with no or minimal operator intervention. It is a second object of the present invention to allow for the fast stabilisation of a network synchronisation process. It is a third object of the present invention to allow newly introduced network nodes to be rapidly synchronised with the network.

According to a first aspect of the present invention there is provided a method of synchronising nodes of a telecommunication network in which a master node is coupled to a Primary Reference Clock (PRC) and a plurality of slave nodes are each arranged to synchronise their internal clock to the PRC using data received on incoming data link, the method comprising:
propagating Synchronisation Status Messages through the network from the master node, with each node through which a message passes incorporating into the message its own identity, thereby generating in each message a path which has been followed by the message; and
for each of at least some of the incoming links of each node, registering the path and/or path length of a Synchronisation Status Message received on a link as an attribute for that link,
characterised in that
a delay in the propagation of the messages is introduced at at least certain of the network nodes, this delay being in addition to the normal processing delay.

Embodiments of the present invention allow a node to compare the merits of different incoming data links as sources of synchronisation information. In the event that synchronisation (or re-synchronisation) is required, the node may select that incoming link having an attribute indicating the shortest path length from the master node. The introduction of a delay in the propagation of messages at at least certain nodes, increases the probability that a synchronisation message will be received first at a given node over a shorter path, rather than over a longer path. This will tend to decrease the overall time taken to synchronise the network.

It will be appreciated that it is necessary to propagate Synchronisation Status Messages on initialising a new network. Synchronisation Status Messages may also be broadcast periodically or at other intervals thereafter in order to enable the network to cope with dynamic changes in network architecture (e.g. due to the failure of an inter-node link or the introduction of a new link or node).

Synchronisation Status Messages may be generated in response to receipt at the master node of a Synchronisation Status Request Message sent from another network node. Such a Request Message may be sent be a new node upon introduction to the network. A Synchronisation Status Message may be generated by a slave node in response to receipt at that slave node of a Synchronisation Status Request Message sent from a neighbouring slave node, with the Synchronisation Status Message including an identification of the path over which the sending slave node has been synchronised.

A node through which a Synchronisation Status Message passes may additionally add to the message its own "distance" from the master node. This distance may be defined by way of the number of node-to-node hops made by the message to get from the master node to the current node. Nodes adjacent to the master node have a distance of PRC + 1, nodes adjacent to nodes having a distance of PRC + 1 have a distance of PRC + 2, etc. For each incoming link, a node may register the distance included in a Synchronisation Status Message received on that link as an attribute for that link.

The present invention is particularly applicable to mobile telecommunications networks such as GSM and UMTS (more particularly to the UTRAN part of a UMTS network). However, the invention is also applicable to fixed line networks such as Public Switched Telephone Networks (PSTNs).

The delay introduced by a slave node may be the same for all slave nodes which introduce a delay. Alternatively, the delay may increase with distance from the master node. Preferably, slave nodes neighbouring the master node do not introduce a delay. The delay to be introduced by a node may be incorporated into a Synchronisation Status Message. This avoids the need to have delay tables at all network nodes. However, in the alternative, delay tables may be present at all nodes.

According to a second aspect of the present invention there is provided a telecommunications network comprising a master node coupled to a Primary Reference Clock (PRC) and a plurality of slave nodes, each of the slave nodes being arranged to synchronise their internal clock to the PRC using data received on incoming data link, each of the slave nodes comprising:
means for receiving on the or each of at least some of the incoming links to the node, a Synchronisation Status Message incorporating the identities of the nodes through which the message has passed;
means for registering the path or path length of the Synchronisation Status Message as an attribute for the link on which it was received;
means for incorporating into one of said messages the identity of the node, thereby generating in the message a path which has been followed by the message; and
means for propagating the modified Synchronisation Status Message to neighbouring nodes using outgoing links,
characterised in that at least certain of the nodes in the network are arranged to introduce a delay in the propagation of the respective modified messages, this delay being in addition to the normal processing delay.

It will be appreciated that a receiving node will synchronise on the best incoming link, as identified by the paths of the Synchronisation Status Messages received on the incoming links. The Synchronisation Status Message received on the best incoming link is the message to which the node will incorporate its identity, and which is propagated to the neighbouring nodes.

According to a third aspect of the present invention there is provided a node for use in a multi-node telecommunications network, the node comprising:
means for receiving on the or each incoming link to the node a Synchronisation Status Message incorporating the identities of the nodes through which the message has passed;
means for registering the path or path length of the or each Synchronisation Status Message as an attribute for the link on which it was received;
means for incorporating into one of the messages the identity of the node, thereby generating in the message a node path which has been followed by the message; and
characterised by
means for propagating the modified Synchronisation Status Message to neighbouring nodes using outgoing links, after a predefined time delay, this delay being in addition to the normal processing delay.

### Brief Description of the Drawings

Figure 1 illustrates schematically a multi-node telecommunication network;
Figure 2 illustrates schematically an alternative multi-node telecommunication network prior to synchronisation;
Figure 3 illustrates the network of Figure 2 following synchronisation;
Figure 4 is a flow diagram illustrating a method of synchronising the nodes of the network of Figures 2 and 3;
Figure 5 illustrates schematically a multi-node telecommunication network prior to synchronisation, and comprising a new node;
Figure 6 illustrates the network of Figure 5 following synchronisation; and
Figure 7 is a flow diagram illustrating a method of synchronising a new node introduced into a multi-node telecommunication network.

### Detailed Description of a Preferred Embodiment

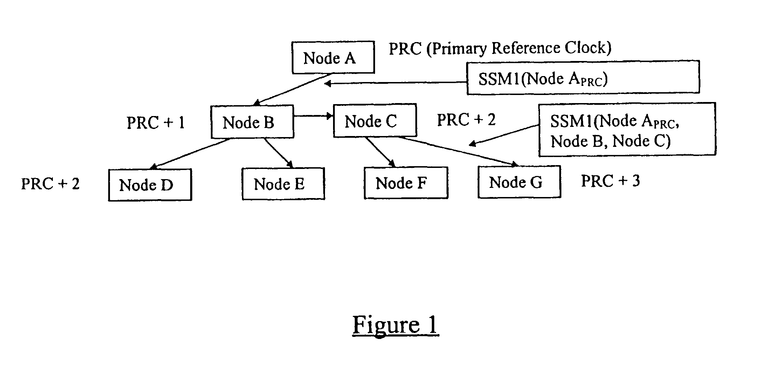

There is illustrated in Figure 1 a multi-node telecommunication network comprising Nodes A to G. The Nodes are interconnected by data links which may carry user data, signalling data, or a combination of both. In one example, the network of Figure 1 might be a UMTS Terrestrial Radio Access Network (UTRAN), where certain of the nodes (for example Node A) might be Radio Network Controllers (RNCs) whilst others of the nodes (for example Nodes B to G) might be Radio Base Stations (RBSs).

Node A is a so-called "master Node" and is connected to a Primary Reference Clock (PRC). As has already been outlined above, the slave Nodes B to G are able to synchronise with another network Node (and hence with the network as a whole) using data signals received on an incoming data links. The accuracy of the synchronisation will depend to a large extent upon the remoteness of the node which is being synchronised from the master node. An important consideration therefore in choosing which incoming link to synchronise on is the number of inter-node hops which a signal has taken to arrive at the node from the master node.

Upon initialisation of the network of Figure 1, Node A initiates the synchronisation selection process by sending a Synchronisation Status Message (SSM) to each of the nodes to which it is connected (in this case only Node B). The SSM includes a "path" field in which Node A places its own identity together with an indication that Node A is the master node. The SSM is received on a given incoming signalling link by Node B. Node B analyses the SSM and identifies the path. The path is stored as an attribute for the incoming signalling link. Node B then adds its own identity to the path field of the SSM (which becomes {Node A_{PRC}, Node B}), and propagates the modified SSM to Nodes C, D, and E to which it is connected.

The receiving nodes again store the path contained in the received SSM as an attribute for the link on which the message is received. Whilst Nodes D and E are not connected to any further nodes, Node C is connected to Nodes F and G. Node C therefore adds its identity to the SSM path field (now {Node A_{PRC}, Node B, Node C}) and propagates it to Nodes F and G. Nodes F and G are not connected to any further Nodes and therefore the SSM propagation terminates at these nodes. The path contained in the SSM is stored as an attribute for the incoming links to Nodes F and G.

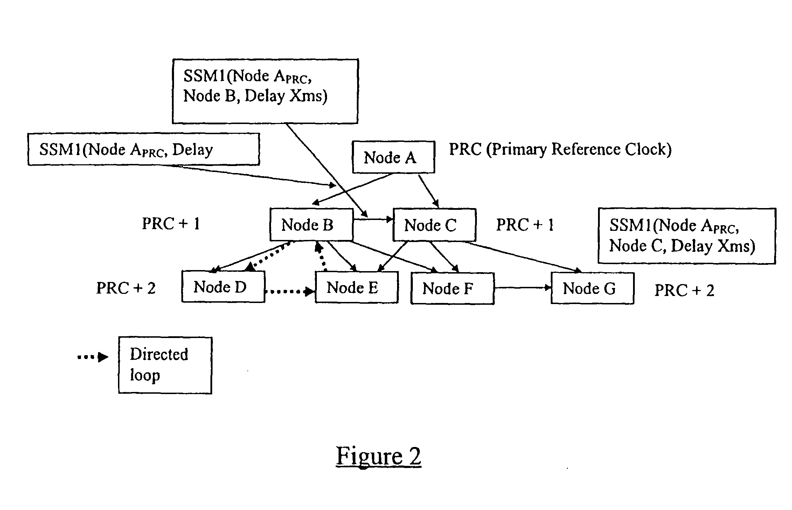

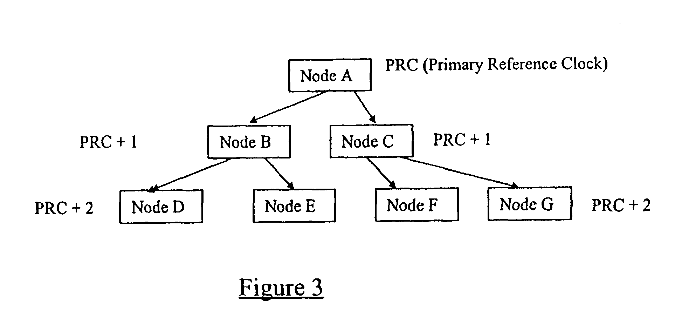

In the very simple example of Figure 1, each Node has only a single incoming data link on which to synchronise. Figure 2 illustrates a modified network in which an additional link exists between Nodes A and C. In this network, upon initialisation, Node C will receive an SSM from both Nodes A and B. The path contained in the SSM received from Node A will be {Node A_{PRC}} whilst that contained in the SSM received from Node B will be {Node A_{PRC}, Node B}. In the event that the network is fully operational, Node C will select the incoming link from Node A as the link to synchronise on. It does this by comparing the attributes allocated to those links as a result of the respective SSMs. Node C will only choose to synchronise on the incoming link from Node B in the event that the link from Node A fails. Figure 3 illustrates the network of Figure 2 following synchronisation. It will be appreciated that this selection process can be extended to selection from three or more incoming links.

It will also be appreciated that Node C will only propagate to Nodes F and G (at least when the network is fully operational) the SSM which is received from Node A. Only in the event that the link to Node A fails will Node C propagate the SSM received from Node B to Node F and G.

Figure 2 illustrates using dashed lines a so-called "directed loop" which might arise when Node D is connected to Node E and Node E is connected back to Node B. In this situation, an SSM propagated from Node E to Node B will include the path {Node A_{PRC}, Node B, Node D, Node E}. Node B will find that its own identity is contained in the path and hence will detect a directed loop.

It will be appreciated that where a Node has several incoming links on which SSMs may be received, it is possible that a node might end up receiving an SSM having a relatively long path before subsequently receiving an SSM having a shorter path. The result will be that the Node will first synchronise on the link on which the first SSM is received and will subsequently have to re-synchronise on the link on which the second SSM is received. This behaviour can result in a relatively long stabilisation time for the network.

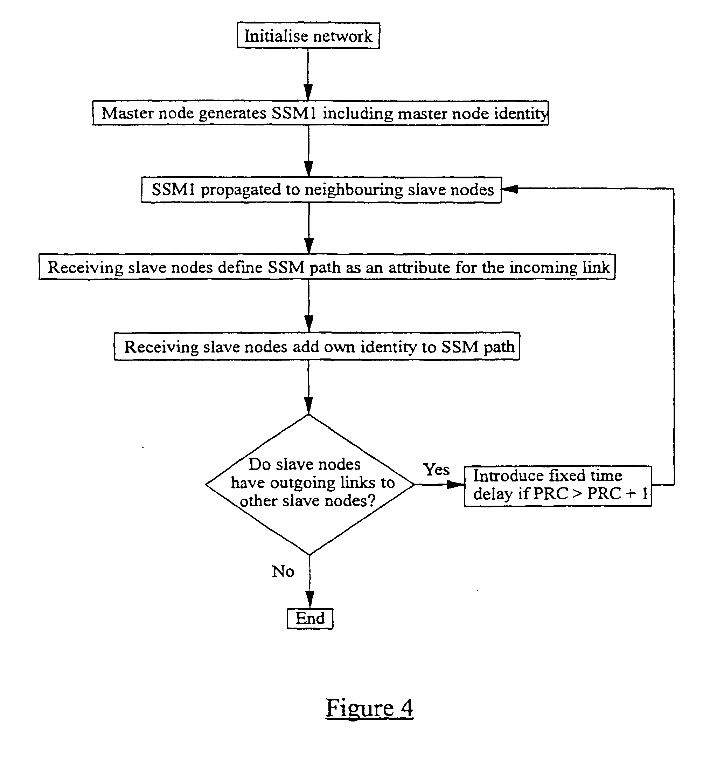

The problem can be mitigated by introducing a delay in the re-transmission of SSMs at each of the slave nodes. Providing this delay is sufficiently long, it will increase the probability that an SSM travelling over a shorter path will be received at a node before SSMs travelling over longer paths. Figure 4 is a flow diagram illustrating this method.

In a modification to the above embodiment, in addition to adding its identity to the path of an SSM, a Node might add its synchronisation reference distance to the SSM. For example (with reference to Figure 2), the Master Node A would add a distance PRC to the SSM, whilst Nodes B and C would add a distance PRC+1, Nodes D, E, F, and G would add a distance PRC+2 etc. It is then a simple operation for a Node to determine the synchronisation quality of an incoming link.

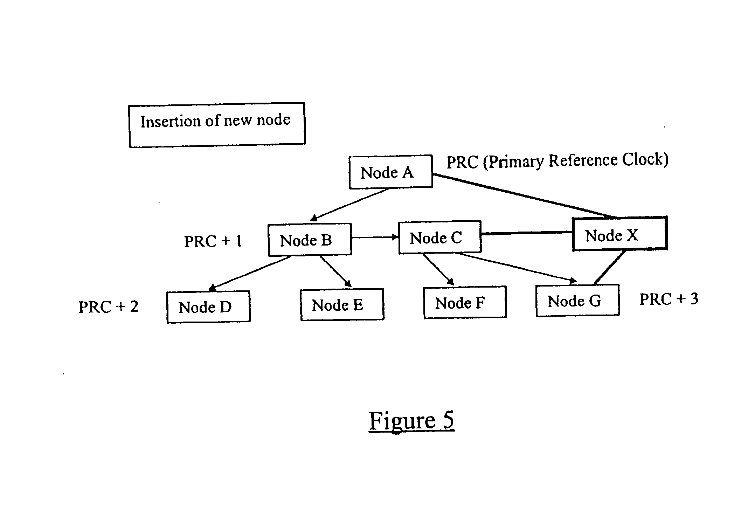

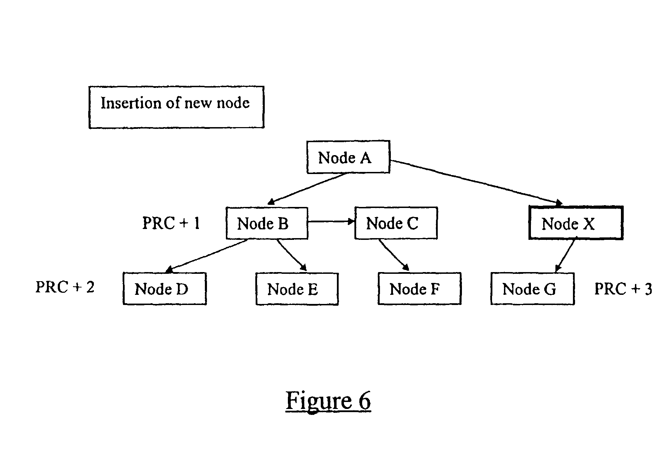

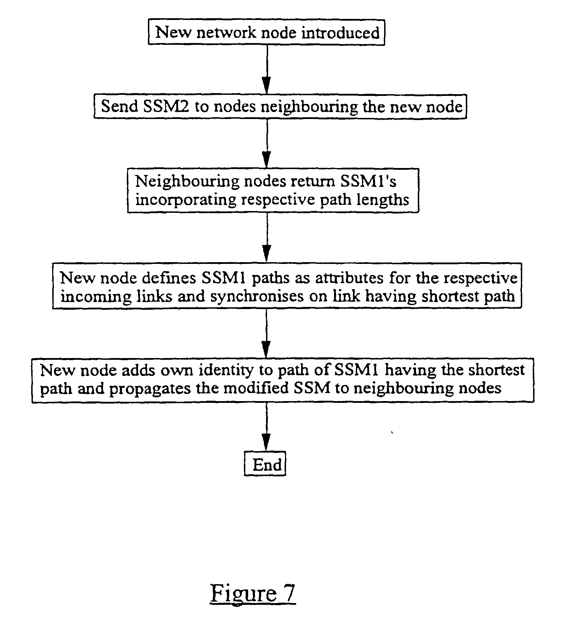

In a further modification to the above embodiment, a second SSM message, referred to here as a Synchronisation Status Message Request (SSM2), may be introduced. This message is generated by a Node and is sent to neighbouring Nodes, requesting that these Nodes return to the enquiring Node an SSM of the first form (SSM1). This procedure may be used for example by a new Node X introduced to an existing network. Such a scenario is illustrated in Figure 5, with Figure 6 illustrating the situation after synchronisation has been achieved. Figure 7 is a flow diagram illustrating this method.

It will be appreciated by the person of skill in the art that various modifications may be made to the above described embodiment without departing from the scope of the present invention. For example, a delay on acting upon a received SSM may be introduced at receiving slave nodes (rather than delaying the sending of the message). This delay provides an opportunity for other SSMs to arrive at the node (and which may have travelled over a shorter path) prior to synchronisation occurring.

## Claims

1. A method of synchronising nodes of a telecommunication network in which a master node is coupled to a Primary Reference Clock (PRC) and a plurality of slave nodes are each arranged to synchronise their internal clock to the PRC using data received on incoming data link, the method comprising:
propagating Synchronisation Status Messages through the network from the master node, with each node through which a message passes incorporating into the message its own identity, thereby generating in each message a path which has been followed by the message; and
for each of at least some of the incoming links of each node, registering the path or path length of a Synchronisation Status Message received on that link as an attribute for that link,
**characterised in that**
a delay in the propagation of the messages is introduced at at least certain of the network nodes, this delay being in addition to the normal processing delay.

2. A method according to claim 1 and comprising selecting that incoming link having an attribute indicating the shortest path length from the master node as the link to synchronise on.

3. A method according to claim 1 or 2 and comprising propagating Synchronisation Status Messages on initialising a new network.

4. A method according to any one of the preceding claims and comprising sending Synchronisation Status Messages periodically or at other intervals thereafter in order to enable the network to cope with dynamic changes in network architecture.

5. A method according to any one of the preceding claims and comprising, wherein Synchronisation Status Messages are generated in response to receipt at the master node of a Synchronisation Status Request Message sent from another network node.

6. A method according to any one of the preceding claims and comprising generating a Synchronisation Status Message at a slave node in response to receipt at that slave node of a Synchronisation Status Request Message sent from a neighbouring slave node, with the Synchronisation Status Message including an identification of the path over which the sending slave node has been synchronised.

7. A method according to any one of the preceding claims, wherein a node through which a Synchronisation Status Message passes adds to the message its own distance from the master node and, for each incoming link, a node registers the distance included in a Synchronisation Status Message received on that link as an attribute for that link.

8. A method according to any one of the preceding claims, wherein the network is a UMTS network.

9. A method according to any one of the preceding claims, wherein the delay introduced by a slave node is the same for all slave nodes which introduce a delay.

10. A method according to any one of claims 1 to 8, wherein the delay increases with distance from the master node.

11. A method according to any one of the preceding claims, wherein the delay to be introduced by a node for a Synchronisation Status Message is identified in the Synchronisation Status Message.

12. A method according to any one of claims 1 to 10, wherein the delay to be introduced by a node for a Synchronisation Status Message is defined by a delay table stored at the node.

13. A telecommunications network comprising a master node coupled to a Primary Reference Clock (PRC) and a plurality of slave nodes, each of the slave nodes being arranged to synchronise their internal clock to the PRC using data received on incoming data link, each of the slave nodes comprising:
means for receiving on the or each of at least some of the incoming links to the node, a Synchronisation Status Message incorporating the identities of the nodes through which the message has passed;
means for registering the path or path length of the Synchronisation Status Message as an attribute for the link on which it was received;
means for incorporating into one of said messages the identity of the node, thereby generating in the message a path which has been followed by the message; and
means for propagating the modified Synchronisation Status Message to neighbouring nodes using outgoing links,
**characterised in that** at least certain of the nodes in the network are arranged to introduce a delay in the propagation of the respective modified messages, this delay being in addition to the normal processing delay.

14. A node for use in a multi-node telecommunications network, the node comprising:
means for receiving on the or each of at least some of the incoming links to the node a Synchronisation Status Message incorporating the identities of the nodes through which the message has passed;
means for registering the path or path length of the or each Synchronisation Status Message as an attribute for the link on which it was received;
means for incorporating into one of the messages the identity of the node, thereby generating in the message a node path which has been followed by the message; and
**characterised by**
means for propagating the modified Synchronisation Status Message to neighbouring nodes using outgoing links, after a predefined time delay, this delay being in addition to the normal processing delay.

## Patentansprüche

1. Verfahren zum Synchronisieren von Knoten eines Telekommunikationsnetzwerks, wobei ein Master-Knoten mit einem Primärreferenztakt (PRC) gekoppelt ist, und eine Mehrzahl von Slave-Knoten jeweils so gestaltet sind, dass sie ihren internen Takt mittels Daten auf den PRC synchronisieren, die auf der eingehenden Datenverbindung empfangen wurden, wobei das Verfahren die folgenden Schritte umfasst:
Propagieren von Synchronisationsstatusmeldungen durch das Netzwerk von dem Master-Knoten, wobei jeder Knoten, durch den eine Meldung passiert, seine eigene Identität in die Meldung integriert, um so in jeder Meldung einen Pfad zu erzeugen, den die Meldung verfolgt hat; und
für jede von wenigstens einigen der eingehenden Links jedes Knotens, Registrieren des Pfades oder der Pfadlänge einer Synchronisationsstatusmeldung, die auf dieser Verbindung empfangen wurde, als ein Attribut für diese Verbindung,
**dadurch gekennzeichnet, dass**
eine Verzögerung in die Propagierung der Meldungen auf wenigstens bestimmten der Netzwerkknoten eingeführt wird, wobei diese Verzögerung zusätzlich zur normalen Verarbeitungsverzögerung ist.

2. Verfahren nach Anspruch 1, umfassend das Selektieren derjenigen eingehenden Verbindung, die ein Attribut hat, das die kürzeste Pfadlänge vom Master-Knoten als die Verbindung angibt, auf der synchronisiert wird.

3. Verfahren nach Anspruch 1 oder 2, umfassend das Propagieren von Synchronisationsstatusmeldungen nach dem Initialisieren eines neuen Netzwerks.

4. Verfahren nach einem der vorherigen Ansprüche, umfassend das Senden von Synchronisationsstatusmeldungen periodisch oder in anderen Intervallen danach, so dass das Netzwerk dynamische Änderungen der Netzwerkstruktur bewältigen kann.

5. Verfahren nach einem der vorherigen Ansprüche, wobei Synchronisationsstatusmeldungen als Reaktion auf den Empfang einer von einem anderen Netzwerkknoten gesendeten Synchronisationsstatusanforderungsmeldung am Master-Knoten erzeugt werden.

6. Verfahren nach einem der vorherigen Ansprüche, umfassend das Erzeugen einer Synchronisationsstatusmeldung an einem Slave-Knoten als Reaktion auf den Eingang einer von einem benachbarten Slave-Knoten gesendeten Synchronisationsstatusanforderungsmeldung an diesem Slave-Knoten, wobei die Synchronisationsstatusmeldung eine Identifikation des Pfades beinhaltet, über den der sendende Slave-Knoten synchronisiert wurde.

7. Verfahren nach einem der vorherigen Ansprüche, wobei ein Knoten, durch den eine Synchronisationsstatusmeldung passiert, seine eigene Entfernung vom Master-Knoten hinzufügt und für jede eingehende Verbindung ein Knoten die Entfernung, die in einer auf dieser Verbindung empfangenen Synchronisationsstatusmeldung enthalten ist, als ein Attribut für diese Verbindung registriert.

8. Verfahren nach einem der vorherigen Ansprüche, wobei das Netzwerk ein UMTS-Netzwerk ist.

9. Verfahren nach einem der vorherigen Ansprüche, bei dem die durch einen Slave-Knoten eingeführte Verzögerung für alle eine Verzögerung einführenden Slave-Knoten dieselbe ist.

10. Verfahren nach einem der Ansprüche 1 bis 8, wobei die Verzögerung mit der Entfernung vom Master-Knoten zunimmt.

11. Verfahren nach einem der vorherigen Ansprüche, wobei die von einem Knoten für eine Synchronisationsstatusmeldung eingeführte Verzögerung in der Synchronisationsstatusmeldung identifiziert wird.

12. Verfahren nach einem der Ansprüche 1 bis 10, wobei die von einem Knoten für eine Synchronisationsstatusmeldung eingeführte Verzögerung von einer an dem Knoten gespeicherten Verzögerungstabelle definiert wird.

13. Telekommunikationsnetzwerk, umfassend einen Master-Knoten, der mit einem Primärreferenztakt (PRC) gekoppelt ist, und eine Mehrzahl von Slave-Knoten, wobei jeder der Slave-Knoten so gestaltet ist, dass er seinen internen Takt mittels Daten auf den PRC synchronisiert, die auf der eingehenden Datenverbindung empfangen wurden, wobei jeder der Slave-Knoten Folgendes umfasst:
Mittel zum Empfangen einer Synchronisationsstatusmeldung, die die Identitäten der Knoten integriert, durch die die Meldung passiert ist, auf der oder jeder von wenigstens einigen der eingehenden Verbindungen zu dem Knoten;
Mittel zum Registrieren des Pfades oder der Pfadlänge der Synchronisationsstatusmeldung als ein Attribut für die Verbindung, auf der sie empfangen wurde;
Mittel zum Integrieren der Identität des Knotens in eine der genannten Meldungen, um dadurch in der Meldung einen Pfad zu erzeugen, den die Meldung verfolgt hat; und
Mittel zum Propagieren der modifizierten Synchronisationsstatusmeldung zu benachbarten Knoten unter Verwendung von abgehenden Verbindungen,
**dadurch gekennzeichnet, dass** wenigstens bestimmte der Knoten im Netzwerk so gestaltet sind, dass sie eine Verzögerung in die Propagierung der jeweiligen modifizierten Meldungen einführen, wobei diese Verzögerung zusätzlich zur normalen Verarbeitungsverzögerung ist.

14. Knoten für die Verwendung in einem Mehrknoten-Telekommunikationsnetzwerk, wobei der Knoten Folgendes umfasst:
Mittel zum Empfangen einer Synchronisationsstatusmeldung, die Identitäten der Knoten beinhaltet, durch die die Meldung passiert ist, auf der oder jeder von wenigstens einigen der eingehenden Verbindungen zu dem Knoten;
Mittel zum Registrieren des Pfades oder der Pfadlänge der oder jeder Synchronisationsstatusmeldung als ein Attribut für die Verbindung, auf der sie empfangen wurde;
Mittel zum Integrieren der Identität des Knotens in eine der Meldungen, um dadurch in der Meldung einen Knotenpfad zu erzeugen, den die Meldung verfolgt hat; und
**gekennzeichnet durch**
Mittel zum Propagieren der modifizierten Synchronisationsstatusmeldung zu benachbarten Knoten unter Verwendung von abgehenden Verbindungen nach einer vordefinierten Zeitverzögerung, wobei diese Verzögerung zusätzlich zur normalen Verarbeitungsverzögerung ist.

## Revendications

1. Procédé de synchronisation de noeuds d'un réseau de télécommunication dans lequel un noeud maître est couplé à une horloge de référence primaire (PRC) et une pluralité de noeuds esclaves sont chacun agencés pour synchroniser leurs horloges internes sur la PRC en utilisant des données qui sont reçues sur une liaison de données arrivante, le procédé comprenant:
la propagation de messages d'état de synchronisation au travers du réseau depuis le noeud maître, chaque noeud par l'intermédiaire duquel un message passe incorporant dans le message sa propre identité, d'où ainsi la génération dans chaque message d'une voie qui a été suivie par le message; et
pour chacune d'au moins certaines des liaisons arrivantes de chaque noeud, l'enregistrement de la voie ou de la longueur de voie d'un message d'état de synchronisation qui est reçu sur cette liaison en tant qu'attribut pour cette liaison,
**caractérisé en ce que**:
un retard au niveau de la propagation des messages est introduit au niveau d'au moins certains des noeuds de réseau, ce retard étant en plus du retard de traitement normal.

2. Procédé selon la revendication 1 et comprenant la sélection de la liaison arrivante qui présente un attribut qui indique la longueur de voie la plus courte depuis le noeud maître en tant que liaison pour une synchronisation dessus.

3. Procédé selon la revendication 1 ou 2 et comprenant la propagation de messages d'état de synchronisation lors de l'initialisation d'un nouveau réseau.

4. Procédé selon l'une quelconque des revendications précédentes et comprenant l'envoi de messages d'état de synchronisation de façon périodique ou selon d'autres intervalles ensuite afin de permettre que le réseau fasse face à des variations dynamiques au niveau de l'architecture du réseau.

5. Procédé selon l'une quelconque des revendications précédentes et dans lequel des messages d'état de synchronisation sont générés en réponse à une réception au niveau du noeud maître d'un message de requête d'état de synchronisation qui est envoyé depuis un autre noeud de réseau.

6. Procédé selon l'une quelconque des revendications précédentes et comprenant la génération d'un message d'état de synchronisation au niveau d'un noeud esclave en réponse à la réception au niveau de ce noeud esclave d'un message de requête d'état de synchronisation qui est envoyé depuis un noeud esclave voisin, le message d'état de synchronisation incluant une identification de la voie sur laquelle le noeud esclave d'envoi a été synchronisé.

7. Procédé selon l'une quelconque des revendications précédentes, dans lequel un noeud par l'intermédiaire duquel un message d'état de synchronisation passe additionne au message sa propre distance depuis le noeud maître et pour chaque liaison arrivante, un noeud enregistre la distance qui est incluse dans un message d'état de synchronisation qui est reçu sur cette liaison en tant qu'attribut pour cette liaison.

8. Procédé selon l'une quelconque des revendications précédentes, dans lequel le réseau est un réseau UMTS.

9. Procédé selon l'une quelconque des revendications précédentes, dans lequel le retard qui est introduit par un noeud esclave est le même pour tous les noeuds esclaves qui introduisent un retard.

10. Procédé selon l'une quelconque des revendications 1 à 8, dans lequel le retard augmente en fonction de la distance par rapport au noeud maître.

11. Procédé selon l'une quelconque des revendications précédentes, dans lequel le retard à introduire par un noeud pour un message d'état de synchronisation est identifié dans le message d'état de synchronisation.

12. Procédé selon l'une quelconque des revendications 1 à 10, dans lequel le retard à introduire par un noeud pour un message d'état de synchronisation est défini par une table de retards qui est stockée au niveau du noeud.

13. Réseau de télécommunication comprenant un noeud maître qui est couplé à une horloge de référence primaire (PRC) et une pluralité de noeuds esclaves, chacun des noeuds esclaves étant agencé pour synchroniser son horloge interne sur la PRC en utilisant des données qui sont reçues sur une liaison de données arrivante, chacun des noeuds esclaves comprenant:
un moyen pour recevoir sur la liaison ou sur chacune d'au moins certaines des liaisons au noeud arrivantes un message d'état de synchronisation qui incorpore les identités des noeuds par l'intermédiaire desquels le message est passé;
un moyen pour enregistrer la voie ou la longueur de voie du message d'état de synchronisation en tant qu'attribut pour la liaison sur laquelle il a été reçu;
un moyen pour incorporer dans l'un desdits messages l'identité du noeud, d'où ainsi la génération dans le message d'une voie qui a été suivie par le message; et
un moyen pour propager le message d'état de synchronisation modifié jusqu'à des noeuds voisins en utilisant des liaisons sortantes,
**caractérisé en ce qu'**au moins certains des noeuds dans le réseau sont agencés pour introduire un retard au niveau de la propagation des messages modifiés respectifs, cc retard étant en plus du retard de traitement normal.

14. Noeud pour une utilisation dans un réseau de télécommunication multi-noeud, le noeud comprenant:
un moyen pour recevoir sur la liaison ou sur chacune d'au moins certaines des liaisons au noeud arrivantes un message d'état de synchronisation qui incorpore les identités des noeuds par l'intermédiaire desquels le message est passé;
un moyen pour enregistrer la voie ou la longueur de voie du ou de chaque message d'état de synchronisation en tant qu'attribut pour la liaison sur laquelle il a été reçu;
un moyen pour incorporer dans l'un des messages l'identité du noeud, d'où ainsi la génération dans le message d'une voie de noeud qui a été suivie par le message; et
**caractérisé par**:
un moyen pour propager le message d'état de synchronisation modifié jusqu'à des noeuds voisins en utilisant des liaisons sortantes, après un retard temporel prédéfini, ce retard étant en plus du retard de traitement normal.
